# EUROPÄISCHE PATENTANMELDUNG

(11) **EP 0 631 214 A1**
(43) Veröffentlichungstag der Anmeldung: **28.12.1994**
(21) Anmeldenummer: 94107017.9
(22) Anmeldetag: 05.05.1994
(51) Int. Cl.: G05D 1/06, G01S 5/16

(54) **Verfahren zur automatischen Landung von Flugzeugen und Vorrichtung zur Durchführung des Verfahrens**

(30) Priorität: 27.05.1993 CH 1593/93
(71) Anmelder: Oerlikon-Contraves AG, CH-8050 Zürich (CH)
(72) Erfinder: Villalaz, Manuel, CH-8044 Zürich (CH)

(57) **Zusammenfassung**

Das Verfahren und die Vorrichtung zur automatischen Landung von Flugzeugen (1) auf einer vorgegebenen Flugbahn (4) einer vorgegebenen Landezone (2) verwendet keine aktiven erdgebundenen Hilfsmittel, sondern steuert den automatischen Landeanflug aufgrund einer vom Flugzeug (1) aus durchgeführten passiven optischen 3D-Positionsvermessung und mit im Flugzeug angeordneten Bestimmungsmitteln.

## Beschreibung

Die Erfindung bezieht sich auf ein Verfahren zur automatischen Landung von Flugzeugen auf einer vorgegebenen Landezone nach dem Oberbegriff des Anspruchs 1 sowie auf eine Vorrichtung zur Durchführung des Verfahrens.

Aus der Praxis sind verschiedene automatische Landeverfahren bekannt, wobei alle diese Verfahren mindestens teilweise sowohl aktive erdgebundene wie auch flugzeugfeste Hilfsmittel benötigen, wie beispielsweise Laserpositionsvermessung, Radiohöhenmesser, optische Triangulation vom Boden aus, um den Landeanflug autonom zu steuern.

Aufgabe der Erfindung ist es, ein Verfahren zur automatischen Landung von Flugzeugen auf einer vorgegebenen Flugbahn einer vorgegebenen Landezone sowie eine Vorrichtung zur Durchführung des Verfahrens aufzuzeigen, ohne aktive erdgebundene Hilfsmittel zu verwenden.

Diese Aufgaben werden durch die im Kennzeichen der Patentansprüche 1 und 5 gegebenen Lehren gelöst.

Der Vorteil der Erfindung ist darin zu sehen, dass die automatische Landung nur mit Hilfe von flugzeugfesten Einrichtungen durchführbar ist und somit auch ein unbemanntes Flugzeug, z.B. eine Drohne, sicher gelandet werden kann. Die Basis der Erfindung bildet ein einziger passiver optischer flugzeugfester Sensor zur Ermittlung der Position des Flugzeuges in bezug zur Landezone. Sobald der visuelle Kontakt zur Landezone vom Flugzeug aus hergestellt ist, kann der autonome Landeanflug eingeleitet werden.

Ein Ausführungsbeispiel der erfindungsgemässen Vorrichtung ist im folgenden anhand der beigefügten Zeichnungen beschrieben. Es zeigt:
- Fig.1: eine schematische Darstellung eines Landeanfluges und ein Blockschaltbild einer Vorrichtung;
- Fig.2: ein geometrisches Abbild des Koordinatenmoduls.

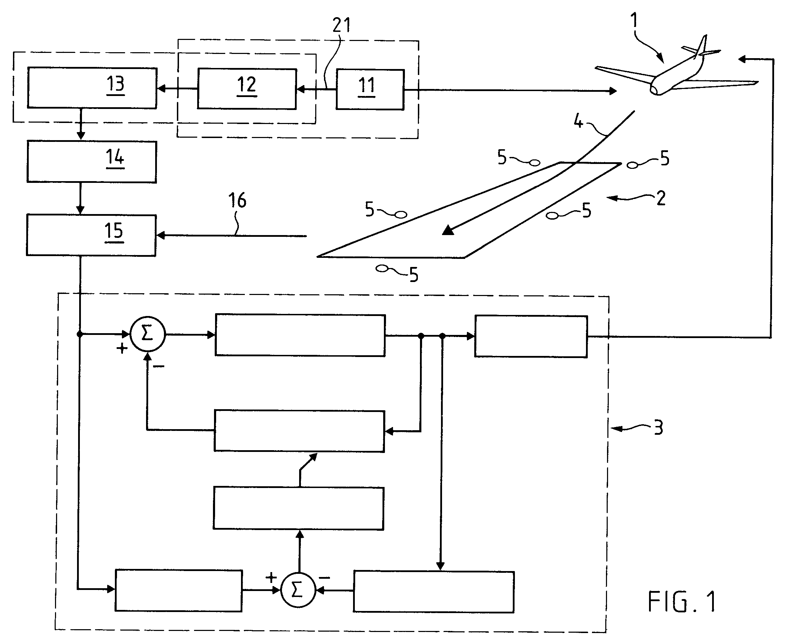

In Fig.1 ist ein Flugzeug 1 in einem Landeanflug auf eine vorgegebene Landezone (2) dargestellt, wobei eine automatische Landung auf einer für die Landung vorgegebenen Flugbahn 4 erfolgen soll und somit vorausgesetzt wird, dass das Flugzeug 1 sich in Landeanflugposition befindet und die Landezone mit entsprechenden Hilfsmitteln 5, z.B. Signallampen oder Farbpunkte etc., gekennzeichnet ist. Eine erfindungsgemässe Vorrichtung enthält die folgenden einander nachgeschalteten und flugzeugfest angeordneten Einheiten oder Module:
Als passiven optischen Sensor einen Bildsensor 11, vorzugsweise eine TV-Kamera oder IR-Kamera (FLIR-Kamera), ein Bildverarbeitungsmodul 13, ein Positions- und Lagemodul 14, ein Flugbahnmodul 15 und eine Avionikservoloopeinheit 3. Ein Analog-Digital-Wandler 12 kann sowohl im Bildsensor 11 als auch im Bildverarbeitungsmodul 13 schaltungsmässig integriert angeordnet sein. Ferner werden Daten 16 für die erwünschte bzw. vorgegebene Flugbahn 4 auf der vorgegebenen Landezone 2 bereitgestellt und dem Flugbahnmodul 15 eingegeben.

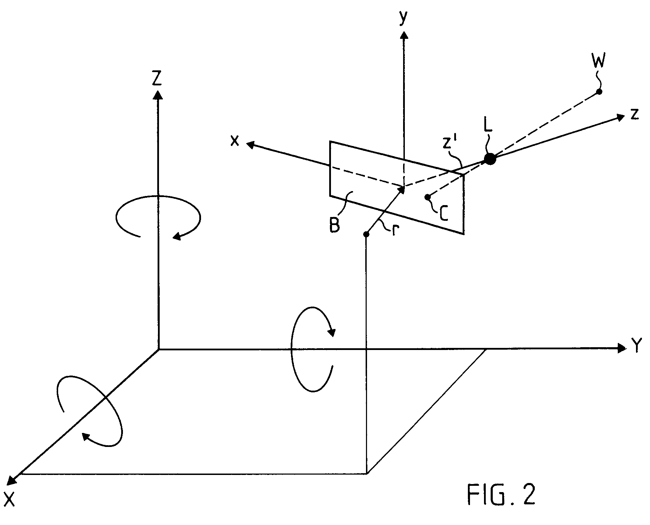

In Fig.2 ist der geometrische Zusammenhang des Koordinatenmoduls für die passive optische Positionsvermessung dargestellt. Ein 3D-Raumpunkt W wie auch der Bildsensor 11 selbst werden in ein Weltkoordinatensystem X, Y, Z gestellt. In einem Bildkoordinatensystem x, y, z des Bildsensors 11 wird das zweidimensionale Bild in der xy-Ebene bzw. einer Bildebene B sowie eine optische Objektivachse in der z-Achse definiert, um die Transformation der 3D-Raumpunkte W, welche beispielsweise den Hilfsmitteln 5 aus Fig.1 entsprechen, in die Bildebene B zu erzielen. Der Bildpunkt C in der Bildebene entspricht damit dem Raumpunkt W. Die Abweichung der Bildebene B vom Schwerpunkt des Flugzeuges 1 ist durch den Vektor r gegeben. Ein Objektiv L ist bestimmt durch die Bildkoordinaten 0,0,z' und z' definiert die Brennweite des Bildsensors bzw. der Kamera 11.

Die Vorrichtung wird wirksam, sobald der visuelle Kontakt zur Landezone 2 hergestellt ist. Der Bildsensor 11 empfängt dann ein analoges Bild der Landezone 2 und erzeugt Signale 21 für ein zweidimensionales Bild derjenigen Raumpunkte W des Weltkoordinatensystems, welche zur Bestimmung der Position und Lage des Flugzeuges 1 benötigt werden. Diese Signale 21 werden im A/D-Wandler 12 aufbereitet bzw. digitalisiert und diese Daten dem Bildverarbeitungsmodul 13 zugeleitet, wo nun die Bestimmung zweidimensionaler Bildkoordinaten der Raumpunkte W der Landezone 2 durchgeführt wird. Diese Koordinatendaten dienen dann im nachgeschalteten Positions- und Lagemodul 14 als Grundlage für die Bestimmung der momentanen räumlichen 3D-Position und Lage des Flugzeuges im Weltkoordinatensystem, z.B. mit einem Kalmanfilter zur Bestimmung des Vektors r des Flugzeuges 1. Im nachgeschalteten Flugbahnmodul 15 werden die Daten der momentanen räumlichen 3D-Position und Lage des Flugzeuges 1 in die aktuelle Flugbahn im Weltkoordinatensystem umgewandelt und mit den eingegebenen Daten 16 der für die Landung vorgegebenen Flugbahn 4 verglichen sowie daraus Daten der resultierenden Flugbahnkorrekturen für die Avionikeinheit 3 zur Steuerung des Flugzeuges 1 auf die vorgegebene Flugbahn 4 erstellt.

## Patentansprüche

1. Verfahren zur automatischen Landung von Flugzeugen (1) auf einer vorgegebenen Landezone (2) mit Mitteln zur Bestimmung der räumlichen Lage des Flugzeuges (1) und mit einer im Flugzeug (1) angeordneten Avionikservoloopeinheit (3) zu dessen Steuerung auf einer für die Landung vorgegebenen Flugbahn (4), dadurch gekennzeichnet, dass die Steuerung des Landeanfluges aufgrund einer vom Flugzeug (1) aus durchgeführten passiven optischen 3D-Positionsvermessung erfolgt und die dazu notwendigen Bestimmungsmittel im Flugzeug (1) angeordnet werden.

2. Verfahren nach Anspruch 1, dadurch gekennzeichnet, dass im Flugzeug (1) ein Bildsensor (11) vorgesehen wird zur Erzeugung von Signalen für ein zweidimensionales Bild derjenigen Raumpunkte (W) eines Weltkoordinatensystems, welche zur Bestimmung der Position und Lage des Flugzeuges (1) benötigt werden.

3. Verfahren nach Anspruch 2, dadurch gekennzeichnet, dass im Flugzeug (1) ein dem Bildsensor (11) nachgeschaltetes Bildverarbeitungsmodul (12, 13), ein diesem nachgeschaltetes Positions- und Lagemodul (14) und ein diesem nachgeschaltetes Flugbahnmodul (15), welchem die Avionikservoloopeinheit (3) nachgeschaltet wird, vorgesehen werden zur Durchführung folgender Verfahrensschritte:
- Aufbereitung der vom Bildsensor gelieferten Signale (21) und Bestimmung der zweidimensionalen Bildkoordinaten der Raumpunkte;
- Bestimmung der momentanen räumlichen Position und Lage des Flugzeuges in einem Weltkoordinatensystem;
- Bestimmung der aktuellen Flugbahn im Weltkoordinatensystem und Vergleich mit der für die Landung vorgegebenen Flugbahn (4) sowie Eingabe der daraus resultierenden Flugbahnkorrekturen an die Avionikservoloopeinheit (3) zur Steuerung des Flugzeuges (1) auf die vorgegebenen Flugbahn (4).

4. Verfahren nach Anspruch 3, dadurch gekennzeichnet, dass die Aufbereitung der vom Bildsensor gelieferten Signale (21) im Bildsensor (11, 12) selbst ausgeführt wird.

5. Vorrichtung zur Durchführung des Verfahrens nach einem der Ansprüche 1 bis 4 mit einer flugzeugfesten Avionikservoloopeinheit (3), gekennzeichnet durch
- einen Bildsensor (11), zur Erzeugung von Signalen (21) für ein zweidimensionales Bild derjenigen Raumpunkte (W) eines Weltkoordinatensystems, welche zur Bestimmung der Position und Lage des Flugzeuges (1) benötigt werden;
- ein dem Bildsensor (11) nachgeschaltetes Bildverarbeitungsmodul (12, 13) zur Aufbereitung der vom Bildsensor gelieferten Signale (21) und zur Bestimmung der zweidimensionalen Bildkoordinaten der Raumpunkte;
- ein dem Bildverarbeitungsmodul (12, 13) nachgeschaltetes Positions- und Lagemodul (14) zur Bestimmung der momentanen räumlichen Position und Lage des Flugzeuges (1) im Weltkoordinatensystem;
- ein dem Positions- und Lagemodul (14) nachgeschaltetes Flugbahnmodul (15) zur Bestimmung der aktuellen Flugbahn im Weltkoordinatensystem und Vergleich mit Daten (16) der für die Landung vorgegebenen Flugbahn sowie Eingabe der daraus resultierenden Flugbahnkorrekturen an die Avionikservoloopeinheit (3) zur Steuerung des Flugzeuges (1) auf die vorgegebene Flugbahn (4).

6. Vorrichtung nach Patentanspruch 5, dadurch gekennzeichnet, dass als Bildsensor (11) eine TV-Kamera oder eine IR-Kamera vorgesehen ist.
